(19) Europäisches Patentamt
European Patent Office
Office européen des brevets

(11) EP 0 713 202 B1

(12) EUROPEAN PATENT SPECIFICATION

(45) Date of publication and mention of the grant of the patent:
**09.06.1999 Bulletin 1999/23**

(51) Int Cl.[6]: **G09B 9/32**, G02B 27/18

(21) Application number: **95307583.5**

(22) Date of filing: **25.10.1995**

(54) **Video projection system**

Videoprojektionssystem

Système de projection vidéo

(84) Designated Contracting States:
**DK GB**

(30) Priority: **25.10.1994 GB 9421598**

(43) Date of publication of application:
**22.05.1996 Bulletin 1996/21**

(73) Proprietors:
- **Buell, Klaus**
  **Rogate, Petersfield, Hampshire GU31 5DG (GB)**
- **Thomas, Euan Richard Hodson**
  **Sheet, Hampshire GU31 4BB (GB)**

(72) Inventors:
- **Buell, Klaus,**
  **Petersfield, Hampshire GU31 5DG (GB)**
- **Thomas, Euan Richard Hodson**
  **Sheet, Hampshire GU31 4BB (GB)**
- **Brookfield, Michael**
  **Gnosall, Stafford ST20 OH (GB)**

(74) Representative: **Bubb, Antony John Allen et al**
**GEE & CO.**
**Chancery House**
**Chancery Lane**
**London WC2A 1QU (GB)**

(56) References cited:

| | |
|---|---|
| **WO-A-86/00685** | **WO-A-95/32489** |
| **FR-A- 2 699 690** | **GB-A- 2 254 936** |
| **JP-A- 6 289 394** | **US-A- 5 142 387** |

- **PATENT ABSTRACTS OF JAPAN vol. 009, no. 040 (P-336), 20 February 1985 & JP-A-59 180532 (TOUSHIBA DENZAI KK), 13 October 1984,**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 713 202 B1

## Description

The present invention relates to target projection apparatus for use in such applications as air defence training equipment, air traffic control training equipment, or other apparatus, where aircraft or other objects of interest (targets) are displayed on a large, normally spherical, projection screen with substantial angular subtense, typically from 120 degrees up to 360 degrees azimuth.

It is well known that in the case of air defence trainers, a requirement exists that the resolution in the image be sufficient to identify the target at simulated ranges of 7 km and beyond using (focus-corrected) binoculars and optical sights; this places demanding constraints on an image projection system.

In the past, targets have been displayed on an projection screen by a number of means; cine film, video projectors using cathode ray tubes, video light valve projectors. Cine film provides good image brightness and resolution, but does not offer the flexibility of scenario creation demanded by today's users. Video projectors can be used with computerised image generators (CGI) and can thus offer almost total freedom in scenario creation but in the past have offered only low resolution and brightness in the case of CRT projectors. Good performance can be obtained from oil film light valves (e.g. the GE Talaria) but at high cost; this is such that it is only cost effective to produce four targets from a single projector. This considerably complicates the optical design by introducing the need for four way field splitting optics, and reduces light output and resolution of each channel. Naturally this increases the cost of an "entry level" system; the customer must buy a minimum of four target channels from the outset. Light valves such as the Eidophor of Gretag are excellent but prohibitively expensive in this application. The high brightness of light valve video projectors relative to their CRT counterparts is due specifically to the use of arc lamp sources. These have a brightness of $10^8$ - $10^9$ cd/m2 compared with 30000 cd/m2 for a projection CRT. Since, in the case of light valve projectors acceptable image brightness can be obtained at relatively small apertures (F# ≈ > 20), a zoom lens can be used to allow targets to be displayed at close range when they are large and also to retain target detail at long ranges when they are small. The use of a zoom lens is not practicable in a CRT projector comprising three tubes each of 125 mm or more in diameter which have to be operated at an aperture of about F/1.

In the prior art various means of steering the image to the desired location have been proposed, for example either to use a two axis mirror system normally comprising a rotating azimuth turntable to which is attached a fixed 45 degree azimuth mirror together with a 45° degree elevation mirror rotated about the incidence axis of the projected beam; or to gimbal the whole projection system and deflect it bodily in the direction of the required image.

It has been found that the first method is much to be preferred on grounds of platform rigidity and controllability, whereas the second method has serious disadvantages such as large rotational inertias, and poor image stability, and is only used where apertures are so large as to render prohibitive the use of separate deflexion mirrors.

In recent years, the availability of low cost liquid crystal (LC) transmissive display panels has made possible the design and manufacture of large screen video projectors using these devices. LC panels suitable for video projection are available in sizes from about 75 mm diagonal up to approximately 300 mm diagonal. Ceteris paribus, the larger the device the better is the resolution. Because of this only the larger panels offer colour in a single device; smaller panels may be used for colour projectors, but in this case three separate monochrome panels are used together with dichroic beam splitting and combining optics. These must obviously be accurately aligned to attain the resolution of which the panels are capable. The presence in the colour panels of a much larger number of opaque thin film transistor switches means that the panel transmission falls from around 30 per cent for a monochrome panel to around two per cent for a colour panel. Good brightness is obtained from metal halide arc lamps used of from 120 to 575 W depending on projector size.

The small viewing angles of LC panels imply that the intensity of the display falls off rapidly for rays which are not normal to the panel. Thus the rays must strike the rear of the panel at near normal incidence; the implication is that there is therefore no particular advantage in fitting projection optics of high numerical aperture (NA) or low F number (F#). This means that the use of zoom lenses is unlikely to compromise the brightness of the image. This is at variance with the situation which applies in conventional cine or video projectors

An assessment by the inventors of commercially available video projectors employing LC panels showed that the image luminance at the panel surface was completely inadequate for the task of projecting small images from 30 mm to 360 mm diameter at projection distances from 5 m to 14 m at illuminances of 100 lux. To keep the image deflexion mirrors at a reasonable size, the output aperture is limited to about 100 mm; as a zoom range of 12:1 is required to maintain resolution at long range while allowing targets to approach to 400 m, this implies that the zoom lens is working at very low aperture - typically F/28. Even so, there is no theoretical bar to obtaining the desired performance, so clearly there is a need to understand the reason why existing liquid crystal projectors fall so far short in performance as regards the projection of small images at long projection distances.

In the view of the inventors, the problem appears to lie in the choice of source and in the condenser design. Firstly, one needs to bear in mind that conventional video projectors are designed to produce relatively large images; typically there might be a one metre image diagonal at a projection distance of 4 m. The analysis below shows that for

a well-matched design such a projector would require an arc lamp source of at least 13 mm length to achieve the maximum theoretical illuminance. According to data sheets for metal halide arc lamps, this needs a 2.5 kW lamp. Now the reason becomes clear; such a lamp is not practicable because of the insoluble overheating problems with the LC panel that this would pose. The designers are thus obliged to under-run the system, though the results are acceptable in the commercial audio-visual markets. In this regard, it may be noted that a typical not-to-exceed illuminance limit of 300 klux is quoted on the data sheet for 10.4 in panels. The condensers are designed to fill the relatively high aperture projection optics which are suitable for large images and the low effective LC panel luminance can be accepted.

This situation is not acceptable in simulation applications, where maximum panel luminance is necessary. Fortunately the sine condition shows that this can be attained in principle with a source of approximately 2.83 mm in diameter . As there is a standard lamp of 575 W output with a source size of 4 mm x 7 mm, it is convenient to use this. However one should note that the illuminance obtainable at the image is limited to that available from a 2.83 mm source - the extra area cannot be utilised to give additional image brightness. Such a lamp is already used in several commercial video projectors, but as will become apparent the design of the condenser must be radically revised so as to approach the performance of which the lamp is theoretically capable . In the calculation to determine minimum source size, a collection half angle of 90 degrees was assumed. Such a collection angle is not possible with conventional designs; in contrast the technique described herein does enable flux collection over the full forward hemisphere.

Where zoom lenses are used, the image size should have no effect on image illuminance. However, such effects can arise in practice from the instability of the exit pupil as the zoom ratio is varied. This instability or pupil shift can cause the beam to be clipped by lens mounts not at the aperture stop. This potential problem can arise as a consequence of the zoom lens design which needs to be addressed at an early stage. Nor should the panel size theoretically affect image illuminance, though it may do so in practice because of possible overheating problems with small panels.

Referring to Figure 1 of the drawing below, it may be shown that the arc lamp (source) size required is also independent of panel size, and is determined by the projected image size and the requirement to maintain the etendue or Lagrange invariance of the optical system. In the conceptual projection system in Figure 1 below, the source 1 is imaged by the condenser 2 in the projection lens 4, and the LC panel display 3 is imaged by the projection lens onto the dome wall 5.

In the figure, we can use the paraxial approximation (i.e. $\sin \Theta = \Theta$) for all angles save the condenser angle at the source $\Theta_s$ which must be fairly large for the condenser to be efficient. Applying the sine theorem from the source to its image in the projection lens (planes 1 and 4), with the notation of the figure, we get:

$$Y_s \sin\Theta = Y'_s \Theta'_s$$

Likewise from the LC panel to the dome wall (planes 3 and 5), the sine theorem gives us:

$$Y\theta p = Y\theta' p$$

From the geometry, we have,

$$\theta p = Y'_s / d$$

Hence, on substituting for $\Theta p$, we get:

$$Y\ Y'_s/d = Y'_s \theta'_s = Y'\theta' p$$

$$Y_s \sin \theta_s = Y'\ \theta' p$$

Now $\sin \Theta s \leq 1$ so that $Y_s \geq Y'\ \Theta' p$ or for the minimum possible source size $Y_{s\ min} = Y'\ \Theta' p$. Since $\Theta' p = D / 2R$ where D is the projection lens aperture diameter and R the projection distance, then

$$Y_{s\ min} = Y'_{max}\ D/2R\ min$$

For an aperture D of 100 mm, and an image diagonal Y'max of 255 mm, Rmin is 4.5 m. We therefore find that for an ideal condenser, the minimum required source size is 2.83 mm. A 575 W metal halide lamp has an arc of size 4 mm x 7 mm and is therefore adequate for this application.
At this point, the equivalent numbers for commercial video projectors can be deduced. For an aperture of 100 mm, a projection distance of 4 m and an image diagonal of 1 m, the 13 mm matched source size mentioned above is obtained.
Using the figures for the effective panel transmission of 2% and a source luminance for a metal halide lamp of 15 x $10^8$ cd/m2, the effective source luminance is reduced to 3 x $10^6$ cd/m2 by the losses in the panel. Since an optical system conserves luminance, the luminance of the panel is also 3 x $10^6$ cd/m2. If we assume approximately Lambertian scattering, at least close to the panel normal, the light collected ($\Phi$) by the zoom lens optics (collection half angle) $\theta$p from a panel area Ap is then given by:

$$\Phi = \pi L \, Ap \sin^2\theta p$$

Now Ap = $\pi Yp^2 / 4$ where Yp is the panel height (or a circular image format), so that:

$$\Phi = (\pi^2 L/4)\,(Yp \sin \theta p)^2$$

Invoking the sine theorem, we have:

$$Yp \sin \theta p = Y'p \sin \theta'p \cong Y'p\ \theta'p$$

where Y'p is the dome image size and $\Theta$'p the half angle subtended by the projection aperture at the dome screen.

$$\Phi = (\pi^2 L/4)\,(Y'p\ \theta'p)^2$$

Now $\pi Y'p^2 / 4$ is just the projected image area, so that the screen illuminance $E_s$ is then given by:

$$E_s = \pi\ L\ \theta'p^2$$

For a given effective panel luminance, the only degree of freedom the designer has to increase the image illuminance is to increase the effective aperture (i.e. $\Theta$'p). For practical reasons, this is limited to 100 mm or so. Thus there are no design options available. The maximum illuminance of the screen image is then determined by the basic physics of the arrangement. If this is the case, it is necessary to determine just what these limits are.
Now $\Theta$'p is evidently a function of the projection distance R, i.e. $\Theta$'p = D/2R where D is about 100 mm. The illuminance $E_s$ (lux) can therefore be tabulated (Table 1) for various projection distances.

Table 1

| | | | |
|---|---|---|---|
| Projection Distance (m) | 4.5 | 9 | 13.5 |
| Screen Illuminance (lux) | 1160 | 290 | 130 |

These theoretical values of image illuminance are about five times more than the values of illuminance obtained by extrapolating from the experimental measurements using commercial LC video projectors. However, there seems no reason in principle why the desired image illuminance cannot be obtained and the invention as claimed is intended to remedy these drawbacks.
Thus, having established that there is no theoretical bar to obtaining the desired performance, the invention solves the problem of existing projectors which fall so far short of the theoretical illuminance values by roughly a factor of five with illuminances in the range 30 to 150 lux depending on projection distance and precise projector type. The invention stems from the recognition that the reason, from the theoretical rather than the practical viewpoint, is the use of an undersized source.
All conventional condensers, including those used in commercial LC projectors, are really imaging systems

which form an image of the source at some point in the optical system - usually the entrance pupil of the projection lens. The requirements of image formation actually impose unnecessary constraints on the design; we are never interested per se in the image of the source. An example of a conventional condenser is given by WO-A-86 00685 which describes a video projector according to the pre-characterised portion of Claim 1.

This poses the question whether, if this artificial constraint were to be relaxed, the efficiency of the condenser might be improved. It turns out that this is indeed the case, and the use of non-imaging optics does lead to the improvement sought.

According to a first aspect of the present invention, there is provided a condenser for forming electro-magnetic radiation emitted from a source into a beam having an emergent cone angle, comprising a hollow body having an internal reflecting surface of revolution about an optical axis on which is located an entry aperture and an exit aperture, is characterised in that said surface of revolution is defined by a hyperbola whose axis is tilted relative to the optical axis, and revolved about said optical axis and in that said source is situated at the entrance aperture.

According to a second aspect of the present invention, there is provided a video projector comprising a light source, and a condenser for concentrating light from said source onto means for spatially modulating said light and zoom optics arranged to receive and project light transmitted by said means, said condenser including a hollow body having an internal reflecting surface of revolution about an optical axis on which is located a light entry aperture and a light exit aperture, characterised in that the surface of revolution is defined by a hyperbola whose axis is tilted relative to the optical axis, and revolved about said optical axis.

Preferably, the light source is located adjacent said light entry aperture, but may, if appropriately sized, be located at said entry aperture.

Advantageously, the condensing system may be designed to suit a specific arc size, emergent cone angle (to suit the F# of the collecting optics of the zoom projection lens).

Some embodiments of the present invention will now be described, by way of example and with reference to the accompanying drawings, in which:

Figure 1 is diagrammatic view of a conceptual projection system for use in understanding the invention;
Figure 2 is a diagrammatic view of a compound parabolic concentrator similarly for use in understanding the invention;
Figure 3 is a diagrammatic view of a hyperbolic condenser assembly according to the invention;
Figure 4 is a diagrammatic view for use in understanding the condenser assembly of Figure 3;
Figure 5 is a further diagrammatic view for use in understanding the condenser assembly of Figure 3;
Figures 6a and 6b show respective side and front views of a video projector according to a still further embodiment of the invention; and
Figures 7a and 7b show respective top and side views of a an unrestricted image deflexion system according to a yet further embodiment of the invention.

Consider the arrangement of Figure 2. This comprises a reflector 10 which is a surface of revolution about the optical axis 12. The LC panel (not shown) is situated at the large or entrance aperture 14 and rays diverge from each point of the panel at a half angle ($\Theta_o$) chosen to be equal to the numerical aperture (NA) of the zoom lens. The source 16 is situated at the small or exit aperture 18 and just fills it. It is necessary that all rays leaving the lamp within ± 90 degrees of the optical axis leave the panel within the cone of half angle ($\Theta_o$) so that they will be collected by a zoom lens for further projection. This will evidently yield maximum efficiency.

To see how the device 10 operates, consider rays at the extreme angle ($\Theta_o$) incident from the left at the LC panel plane PP' 14. If the rays all leave the aperture SS' 18 at the rim (at point S' as drawn), it is easy to see that the curve PS must be a parabola 20 with its focus 22 at S', and axis 24 inclined at $\Theta_o$ as indicated on the figure. To construct a 3D reflector, the curve 20 is rotated around the concentrator axis 12 (not the parabola axis 24). Reversing the direction of the light, it can be seen that any ray leaving the source 16 and travelling towards the left will exit the large aperture 14 within a cone of half angle $\theta_o$ . Such a ray will therefore enter the aperture of the projection lens (not shown) and thus contribute to the image.

Without wishing to be bound thereby, we believe the dimensions of the device are determined by the exit cone half angle, and the panel and source sizes (i.e. the entrance and exit apertures 14,18). Coordinate geometry shows that if PP' = $Y_p$, SS' = $Y_s$, and the length of the device is L, then:

$$Yp = Ys / \sin \theta_o$$

$$L = [(Yp + Ys)/2] \cot \theta_o$$

In addition, the focal length f of the parabola may also be computed and is given by:

$$f = Ys\ (1 + \sin\ \theta_o)$$

The equation of the parabolic curve can be obtained from the basic equation of the parabola $y^2 = 4\,f\,x$, followed by a translation of the curve by a distance f and a rotation of the axes by an angle $\Theta_o$.

In the present case $Y_s$ = 2.83 mm and $Y_p$ = 160 mm for a 264 mm (10.4 in) panel. Hence $\Theta_o$ = 1.013 deg, which determines the aperture of the zoom lens (F/28). The length of the condenser is then some 4.6 m, and takes the form of a long tapering tube.

It will be apparent that this length is inconveniently long for manufacturing and presents practical design problems in a projector. However the length can be reduced to a more convenient 690 mm using the reflector 30 in conjunction with a lens 40 (as shown in Figure 3) placed between the reflector 30 and the LC 42; in this case the form of the reflector 30 profile turns out to be hyperbolic. It would be desirable to place the arc or lamp 32 in the throat of the reflector, but the glass envelope 34 of the lamp 32 precludes this. Instead two hemispherical mirrors 36 are used to form an image of the arc 32 in the throat 38 of the reflector 30. As the mirrors 36 almost totally enclose the lamp 32, this collection arrangement is efficient.

The hyberbolic concentrator 30 together with its associated condenser lens 40 (shown in Figure 3) forms a highly efficient light collection apparatus that conserves Θtendue. That is, if, referring now to Figure 4, the primed quantities refer to the exit aperture (the lens) 44 and the unprimed to the entrance aperture (the throat) 46, then:

$$h \cdot \sin\theta = h' \cdot \sin\theta'$$

The reflector profile has the form of a hyperbola; however the axis of this hyperbola is inclined to the optical axis of the condenser. The internal surface of this reflector is generated by revolving this off-axis hyperbolic curve, not about its own axis, but about the optical axis 48 of the condenser. As the device collects over the 180 deg forward angle (i.e. $\Theta$ = 90 deg), we have:

$$\sin\theta' = \left(\frac{h}{h'}\right)$$

The limiting output angle $\Theta'$ is determined by the acceptance angle (entrance pupil) of the zoom lens (arcsin (1/56.5) ), h' is the panel radius (80 mm), so that the throat radius or required source radius (h) works out as 1.415 mm.

The principle of operation is as illustrated in Figure 4; a parallel beam incident at the limiting angle $\Theta'$ is directed to the focus 50 of the secondary branch of the hyperbola. However the hyberbolic reflector profile causes the beam to be focused instead at the focus 52 of the primary hyperbola. This is arranged to be at the rim of the throat diametrically opposite; in fact this condition determines uniquely the equation of the profile. Beams incident at angles less than the maximum value fall within the aperture of the throat. The arguments can be reversed; light which starts at the throat will thus be emitted as a collimated beam within a cone of $\pm\Theta'$.

This argument is exact in two dimensions where the efficiency of the arrangement is 100%. In three dimensions the efficiency falls slightly owing to the effects of skew rays.

The length of the reflector is determined from basic geometrical considerations. Application of similar triangles in figure 4 reveals that:

$$L = \frac{f(h + h')}{(f\theta' + h')}$$

If we limit the condenser lens, which has a large diameter and is thus more prone to aberrations, to F/5 , the focal length (f) is seen to be 800 and the length (L) 692 mm. However to allow mounting of the condenser lens, the length has been truncated by about 40 mm; this has negligible effect on performance.

The input and output apertures and the focal length of the lens in fact uniquely determine the internal profile of the reflector. No further design degrees of freedom exist. This profile is rotated about the optical axis of the reflector (not the axis of the hyperbola) to give a surface of revolution forming the interior or reflecting surface of the reflector. The form of the profile follows from the analysis given below. The geometry is illustrated in figure 5.

Image height $y_f$ at $\Theta'$ equal to arcsin (1/56.5) or 1.013 degrees is given by:

$$y_f = f \cdot \tan\theta'$$

For f = 800 mm, $y_f$ = 14.2 mm.
The Cartesian equation of a hyperbola in standard form is given by :

$$\frac{x^2}{a^2} - \frac{y^2}{b^2} = 1$$

where $b^2 = a^2(e^2 - 1)$, a is the pole of the hyperbola, and e is the eccentricity which is greater than unity for a hyperbola. The focal distance F = ae. The analysis consists in obtaining the values of a and e and then determining the tilt of the axis of the hyperbola in the O' frame with respect to the optical axis of the reflector (angle w). The results are then expressed in xy-coordinates referred to the O frame.
From the geometry of the figure, the quantity a can be seen to be given by:

$$a = \frac{\sqrt{[(y_f - h)^2 + (f - L)^2]}}{2} - h$$

By considering the interfocal distance ( 2F = 2ae ), the eccentricity e can be shown to be given by:

$$\varepsilon = \frac{\sqrt{[(y_f + h)^2 + (f - L)^2]}}{2 \cdot a}$$

Inserting values yields a = 53.1 mm, e = 1.03, and F = 54.7 mm. The inclination of the hyperbola axis to the reflector optical axis ( the angle w in the figure) is clearly given by:

$$\omega = -\arctan\left(\frac{y_f + h}{f - L}\right)$$

from which w = -8.19 degrees. The coordinates (p,q) of the origin of the O' frame expressed in terms of the O-frame, the reflector coordinate system, are given by:

$$q = -(a \cdot \varepsilon \cdot \sin(\omega) + h)$$

so that (p,q) is the point (-54.1 mm, 6.37 mm).
Having established the cardinal parameters of the hyperbola, it remains to translate the profile into the O coordinate frame where the x-axis lies on the reflector optical axis with the origin in the centre of the small aperture of the reflector. The profile equation in this frame is obtained on rotating the hyperbola axes clockwise about the origin O' (see figure 5) by the angle w, and then translating the axes from O' (xy-coordinates (p,q) ) to O. Before giving the result, it is convenient to introduce some auxiliary quantities as follows:

$$A = \left[1 - (\varepsilon \cdot \sin\omega)\right] \qquad A = 0.978$$

$$B = \varepsilon^2 \cdot \sin 2 \cdot \omega \qquad B = -0.299$$

$$C = \left[1 - (\varepsilon \cdot \cos\omega)\right] \qquad C = -0.040$$

$$D = a^2 \cdot (\varepsilon^2 - 1) \qquad D = 172.2\ mm^2$$

The equation of the profile y(x) can now be written:

$$y(x) = q + \left\{ \frac{B \cdot (x - p) + \sqrt{(B^2 - 4 \cdot A \cdot C) \cdot (x - p)^2 - 4 \cdot A \cdot D}}{2 \cdot A} \right\}$$

Differentiating this equation with respect to x yields the gradient function tan $\psi$ where $\psi$ is the angle of the tangent to the profile.

$$\tan\Psi = \left(\frac{1}{2 \cdot A}\right) \cdot \left\{ B + \frac{(B^2 - 4 \cdot A \cdot C) \cdot (x - p)}{\sqrt{(B^2 - 4 \cdot A \cdot C) \cdot (x - p)^2 - 4 \cdot A \cdot D}} \right\}$$

The reflector is electroformed in copper with an internal gold coating to prevent tarnishing and improve reflectance. Aluminium, which would have otherwise been preferred on account of its better reflectance in the blue, was not used as it is not easy to electroform.

The recurring cost of these reflectors is low, though there is an initial tooling cost for the mandrel on which the reflector is electro-formed.

The condenser produces an effectively telecentric system. All the principal rays leaving the panel are parallel to the optical axis. A field lens must therefore be placed immediately in front of the panel to direct the light into the entrance pupil of the zoom lens.

An additional benefit of this type of condenser is that only radiation in directions which contribute to the image can be incident on the panel; this prevents heating of the panel by radiation which would fall outside the image beam. In addition, the large separation between source and panel assists in cooling, whether by free or forced convection.

In summary it can be said that in applications where small images are projected over long conjugates, an improvement in image illuminance of about five times over conventional LC projector designs is theoretically possible. Though in practice much less than this is realised, a useful factor of three can reasonably be obtained which brings the system into line with the minimum requirement of 100 lux.

The balance of technical advantage lies clearly in favour of the larger panels. They have higher resolution merely on account of their physical size, and being available in colour allow relatively straightforward projector layout, no dichroic beam splitting and combining optics being required. This also enormously simplifies problems of both set up and alignment and saves considerably on cost.

The large surface area allows for good cooling, both by radiation and convection and this simplifies the design of the condensing system.

The relatively low light transmission of colour panels (circa 2%) is a relative disadvantage vis $\alpha$ vis the monochrome types but their higher transmission is partly offset by losses in the complex dichroic splitting and combining optics not to mention their increased cost.

There is no particular advantage in the compactness of small panels. The projectors here considered are static floor mounted units, rather than portable audio-visual presentation aids.

In the present design, a 10.4 in (264 mm) active TFT matrix colour VGA panel was selected.

A particular implementation of LC crystal video target projection apparatus using this novel condenser arrangement is shown generally in Figures 6 and 7 and described as follows:

The target projection apparatus conveniently breaks down into a number of functional areas. These are:

Condenser and Lamp
LC panel
Zoom lens
Image director

The condenser arrangement which is of the novel type described above illuminates a 158 mm diameter circle on the LC panel with an essentially collimated beam of light from the 575 W metal halide lamp. The source is imaged into the throat of the optical concentrator by means of the pair of hemispherical reflectors. The function of the optical concentrator together with the achromatic doublet placed at its mouth is to produce an intense beam of light of half angle arcsin(1/56.5) to fill the entrance pupil of the zoom lens.

The LC panel is a 10.4 in (264 mm) colour VGA panel and comes complete with all necessary drive electronics; it merely requires a low voltage dc supply and connection to a VGA source. The images are produced on a 158 mm diameter circular area in the centre of the panel. A plano-convex field lens is placed in front of the panel to direct the principal rays from the telecentric condenser into the entrance pupil of the zoom lens.

The 12:1 ratio zoom lens enables the projection of targets identifiable at ranges of 7 km and beyond, while allowing the projection targets as close as 400 m (the closest point of approach - CPA) at the correct scaled size. The zoom lens consists of a zoom part which includes two moving zoom elements and a catadioptric output telescope of 100 mm clear aperture, which maintains the exit pupil constant and also adjusts the focus by means of the Mangin mirror. The central pupil obscuration is of the order of 10 per cent.Lens elements are mounted on precision linear guides and moved by means of dc servo motors.

The image director head is a 500 mm diameter turntable (figure 7) mounted on bearings at the top of the zoom lens vertical support structure with a central window through which the image beam passes. A fixed 45 degree azimuth mirror deflects the image beam in horizontally on to the elliptical elevation mirror which is mounted at 45 degrees to and rotates about the optical axis. The azimuth turntable and elevation mirror drives are both dc servo motors. Electrical signals to the image director head are passed through slip-rings.

The function of the image director head is to direct the target image to the correct point of the projection screen according to the exigencies of the fight profile. It comprises an azimuth turntable of approximately 500 mm in diameter with a 100 mm diameter central hole through which the projected image passes.

The image director is connected to the main structure through a 31 channel slip-ring so as to allow unrestricted azimuth rotation. Mounted on the turntable is a fixed 45 degree azimuth mirror which causes the optical axis of the projected beam to emerge parallel to the plane of the turntable.

The beam is then incident on a 45 degree elliptical mirror whose axis of rotation is collinear with the beam axis. Rotation of this mirror varies the elevation angle of the projected beam.

The lens aperture can be varied from 100 mm diameter to 30 mm diameter by means of an iris diaphragm controlled via a stepper motor. Owing to the central obscuration of the pupil a diameter of 30 mm corresponds to a fully closed aperture. Drive to the diaphragm is effected by clamping the actuating lever and rotating the diaphragm body via an external ring gear.

The 10.4 in LC projection panel is a Sharp LQ10M211 and is located between the condenser and field lens, all three components being mounted in a supporting frame. It is a TFT active matrix transmissive colour panel complete with integral drive electronics and produces a colour image to VGA standards (640 x 480 pixel). The unit accepts a standard VGA format video input.

The panel is rated for a maximum operating temperature of 40 deg C, is degraded by ultraviolet radiation, and has an optical transmittance of only 2% or so; therefore the following precautionary measures will be taken:

IR radiation will be allowed to escape through the condensing optics and so prevented from reaching the panel;
UV blocking coatings will be applied to the condenser lens preceding the panel;
the panel will be forced air cooled.

In addition, the manufacturers specify a maximum illuminance of 300 klux from the rear.

The zoom lens comprises the following principal optical elements which are, in order from the objective lens to the LC panel are:

Group A Objective lens
Group B Mangin mirror (focusing element)
Group C Fixed lens group
Group D Zoom group A (cemented doublet)
Group E Zoom group B (cemented doublet)
Group F Fixed lens group

Group G Fixed cemented doublet

The field lens immediately in front of the LC panel is considered part of the condensing optical system. Because the system is catadioptric and also fairly long, there are a number of folding mirrors (three in all).

The function of the zoom lens is to allow the long range target identification requirements to be met while simultaneously permitting the target to be brought in to the 400 m CPA at its correct scale size. The design specification of the zoom lens is derived from the Johnson criteria for identification of a 17 m x 2 m target at 7 km.

The zoom lens is functionally equivalent to a catadioptric telescope and two moving lens groups which perform the zoom function. The exit pupil of the zoom lens is clamped at the 100 mm diameter front element of the telescope and is where the aperture stop (iris diaphragm) is located. The function of the telescope is to maintain the output aperture constant at 100 mm and prevent aperture clipping as the zoom ratio is varied. Focus is controlled by moving the Mangin mirror of the telescope. It is most important for good image quality that the tilt of this element remains at less than 1 arc min throughout its focus range.

An important design problem with the lens which projects over such long conjugates is the control of chromatic aberrations (lateral colour); this is one of the reasons for using a reflecting telescope.

The F# of the lens is dictated by the fixed aperture of the objective lens; the design ensures that this aperture is flashed at all zoom positions and this yields the best obtainable performance. The best F# is F/28.3 (NA of 1/56.5) which occurs at the highest magnification (x2.15). However the screen illuminance is invariant with magnification. This is a feature of the aperture clamping in the design.

To enable the unit to be conveniently laid out, additional folding mirrors will be placed in the optical path. The moving elements, two zoom groups and the focus group, will be mounted in the vertical image direction head support structure. To prevent the height of the image direction head from becoming unmanageable, the length of the vertical part of the lens is restricted to 420 mm.

The lenses will be coated with multilayer dielectric anti-reflection coatings for the visible band so as to minimise transmission losses through the optics. Folding mirrors have enhanced aluminium coatings of reflectance greater than 90 per cent.

The condenser provides a beam of divergence arcsin (1/56.5) or 1.013 degree on exit from the panel which is exactly matched to the entrance pupil (collection cone angle) of the zoom projection lens. A plano-convex field lens of focal length 756 mm and 160 mm clear aperture, which directs the principal rays of the telecentric condenser optics towards the aperture stop, is placed just in front of the LC panel. This lens, being at an image plane, has negligible effect on the aberrations of the zoom lens. The field lens has a broadband anti-reflection coating.

The projection lamp is an Osram HMI series 575 W metal halide lamp. This has the following characteristics:

| | |
|---|---|
| Source size | 4 mm x 7 mm (approx) |
| Luminous flux | 49000 lumen |
| Colour temperature | 5600 K |
| Envelope dimension | 30 mm dia x 145 mm long |
| Power consumption | 575 W ( 95 V dc x 7 A) |
| Rated life | 750 h |
| Lamp holder | type G38 (unenclosed ceramic) |

The small size of the input aperture (2.83 mm diameter) precludes placing the source at this position because the glass envelope of the lamp (30 mm diameter) would obtrude into this space. Therefore two hemispherical reflectors of 234 mm diameter image the source into the aperture of the concentrator. the hemispherical reflectors are glass mouldings, the concave surfaces of which are ground and polished to give an optical finish; in order to facilitate handling during manufacture and to maintain dimensional stability the wall thickness is nominally 15 mm. One of the reflectors has a 60 mm diameter hole in the wall to allow the concentrator to pass through it.

To prevent useless IR radiation reaching the LC panel, where it may cause heating problems, the hemispherical reflectors are coated as cold mirrors.

The condenser lens is an F/5 achromatic doublet of focal length 800 mm placed at the mouth of the hyperbolic concentrator, just before the LC panel. The lens is optimised to give the best image on the boundary of a 14.2 mm circle in the focal plane (i.e 800 x (1/56.5) mm).

The condenser lens is coated to block the transmission of UV radiation which can cause degradation of the LC panel.

The hyperbolic reflector together with its associated condenser lens forms a highly efficient light collection apparatus which preserves etendue. The form of the internal profile and its method of operation have already been described.

PARTS LIST FOR FIGURES 6 & 7

| PART # | DESCRIPTION |
|---|---|
| 1. | LC panel |
| 2. | 575 W metal halide arc lamp |
| 3. | Hyberboloidal optical concentrator |
| 4. | Hemispherical reflectors |
| 5. | Achromatic doublet |
| 6. | Field lens |
| 7. | Lens group G |
| 8. | Lens group F |
| 9. | Folding mirror |
| 10. | Azimuth turntable |
| 11. | Fixed azimuth mirror (45 deg) |
| 12. | Elliptical elevation mirror |
| 13. | Azimuth servo-motor |
| 14. | Elevation servo-motor |
| 15. | Slip-ring assembly |
| 16. | Lens group A (objective) |
| 17. | Lens group B (Mangin focus mirror) |
| 18. | Lens group C |
| 19. | Lens group D (zoom) |
| | (lens group E (zoom) - not shown) |
| 20. | Folding mirror |
| 21. | Folding mirror (cemented to objective) |

**Claims**

1. A video projector comprising a light source (32), and a condenser (30) for concentrating light from said source (32) onto means (42) for spatially modulating said light and zoom optics arranged to receive and project light transmitted by said means, said condenser including a hollow body having an internal reflecting surface of revolution about an optical axis on which is located a light entry aperture (38) and a light exit aperture (44), characterised in that the surface of revolution is defined by a hyperbola whose axis is tilted relative to the optical axis, and revolved about said optical axis.

2. A projector as claimed in Claim 1, wherein the light source is located adjacent said light entry aperture.

3. A projector as claimed in Claim 1, wherein the light source is located at said entry aperture.

4. A projector as claimed in Claim 1, wherein a lens (40) is located adjacent said light exit aperture (14).

5. A condenser (10) for forming electro-magnetic radiation emitted from a source (16) into a beam having an emergent cone angle, comprising a hollow body having an internal reflecting surface of revolution about an optical axis on which is located an entry aperture (18) and an exit aperture (14) is characterised in that said surface of revolution is defined by a hyperbola (20) whose axis (24) is tilted relative to the optical axis (12), and revolved about said optical axis (12) and in that said source is situated at the entrance aperture.

6. A condenser as claimed in Claim 5 in which a lens (40) is located adjacent said light exit aperture (14).

**Patentansprüche**

1. Ein Videoprojektor bestehend aus einer Lichtquelle (32) und einem Kondensor (30) für die Bündelung der Lichtstrahlen von vorher genannter Lichtquelle (32) auf ein Mittel für räumliches Modulieren vorher genannter Lichtstrahlen und Gummilinse, so angeordnet, um die Lichtstrahlen, durchgelassen von dem vorher genannten Mittel, zu empfangen und projizieren, vorher genannter Kondensor, einschliesslich eines hohlen Körpers mit einer inneren, reflektierenden Rotationsoberfläche um eine optische Achse, auf welcher sich eine Lichteintrittsöffnung (38) und eine Lichtaustrittsöffnung (44) befinden, charakteristisch darin,
dass die Rotationsoberfläche, bestimmt bei einer Hyperbel deren Achse relativ zu der optische Achse geneigt ist und rotiert um die vorher genannte optische Achse.

**2.** Ein Projector wie in Anspruch 1, wobei sich die Lichtquelle neben der vorher genannten Lichteintrittsöffnung befindet.

**3.** Ein Projector wie in Anspruch 1, wobei sich die Lichtquelle in der vorher genannten Lichteintrittsöffnung befindet.

**4.** Ein Projector wie in Anspruch 1, wobei sich eine Linse (40) neben der vorher genannten Lichtaustrittsöffnung befindet.

**5.** Ein Kondensor (10) für dir Bündelung von elektromagnetischer Strahlen, ausgestrahlt von einer Quelle (16), in ein Strahlenbündel, austretend als ein Lichtkonus, einschliesslich eines hohlen Körpers mit einer inneren, reflektierenden Rotationsoberfläche um eine optische Achse, auf welcher sich eine Eintrittsöffnung (18) und eine Austrittsöffnung (14) befinden, charakteristisch darin, dass die Rotationsoberfläche, bestimmt bei einer Hyperbel (20) deren Achse (24) relativ zu der optische Achse (12) geneigt ist und rotiert um die vorher genannte optische Achse und darin, dass sich die vorher genannte Quelle in der Eintrittsöffnung befindet.

**6.** Ein Kondensor wie in Anspruch 5 wobei sich eine Linse (40) neben der vorher genannten Lichtaustrittsöffnung (14) befindet.

## Revendications

**1.** Un projecteur vidéo comprenant une source de lumière (32) et un condensateur (30) afin de concentrer la lumière de la source sur les moyens de modulation spatiale de la lumière et des optiques de type zoom arrangés afin d'admettre et de projeter la lumière transmise par ces moyens, le condensateur y comprenant un corps creux contenant une surface interne reflective ayant la forme d'un hyperbole dont l'axe est incliné par rapport à l'axe optique et révolutioné autour de l'axe optique.

**2.** Un projecteur comme revendiqué selon la Revendication 1, dont la source de la lumière est située à coté de l'ouverture d'entrée.

**3.** Un projecteur comme revendiqué selon la Revendication 1, dont la source de la lumière est située à l'ouverture d'entrée.

**4.** Un projecteur comme revendiqué selon la Revendication 1, dont une lentille (40) est située à l'ouverture de sortie.

**5.** Un condensateur (10) pour diriger le rayonnement électromagnétique émis d'une source (16) dans un faisceau possédant un certain angle conique de sortie, y comprenant un corps creux contenant une surface interne reflective de révolution autour d'un axe optique dans laquelle sont situées une ouverture d'entrée (18) ainsi qu'une ouverture de sortie (14) qui consiste d'une surface de révolution hyperbolique dont l'axe est incliné par rapport à l'axe optique (12) et révolutioné autour de l'axe optique (12) et dans lequel la source est située à l'ouverture d'entrée.

**6.** Un condensateur comme décrit dans la Revendication 5 dans laquelle une lentille (40) est située à l'ouverture de sortie.

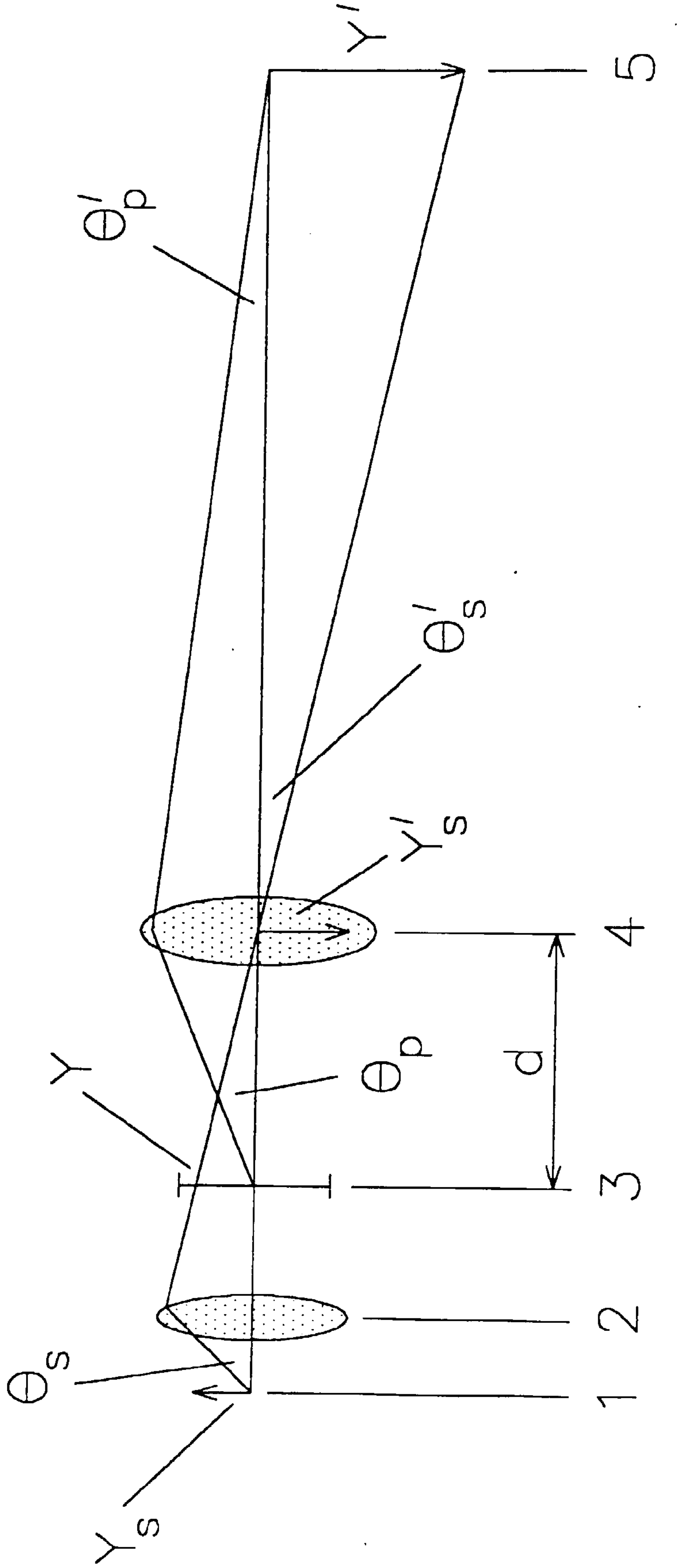


Figure 1

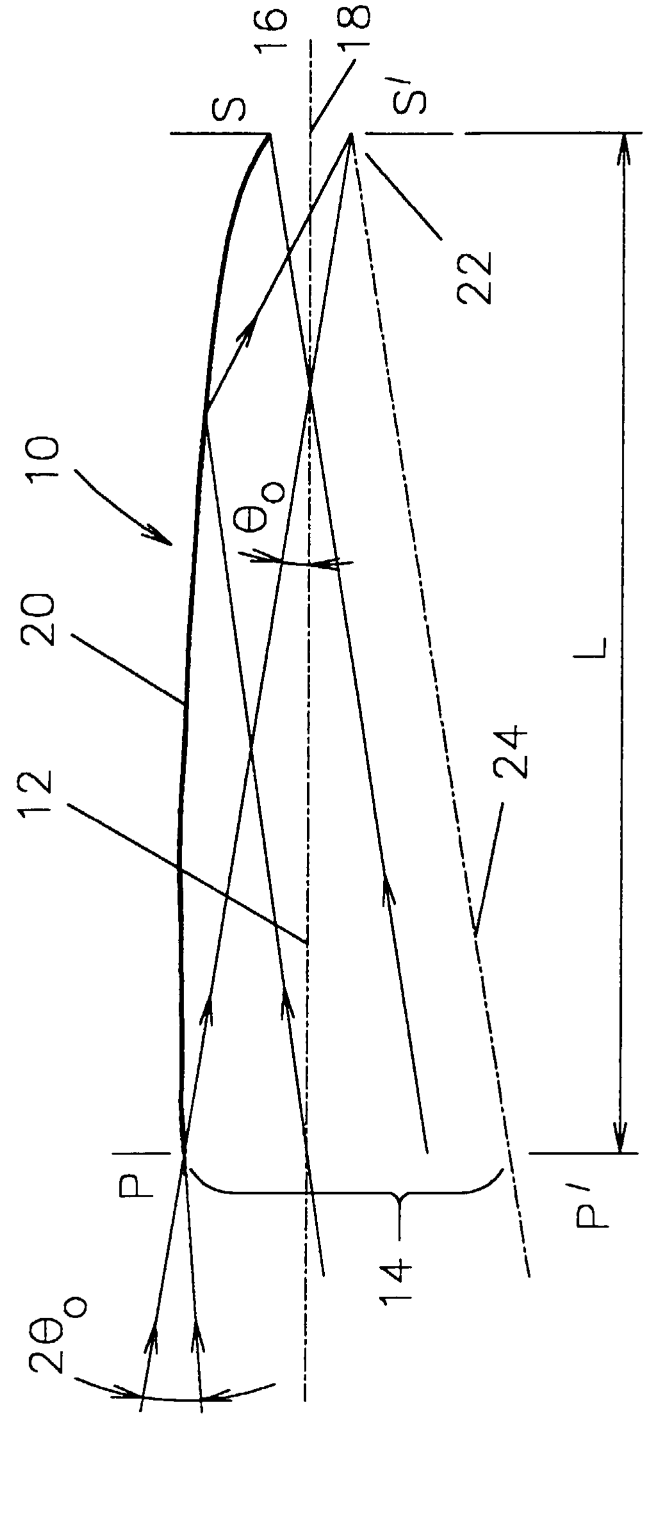


Figure 2

Figure 3

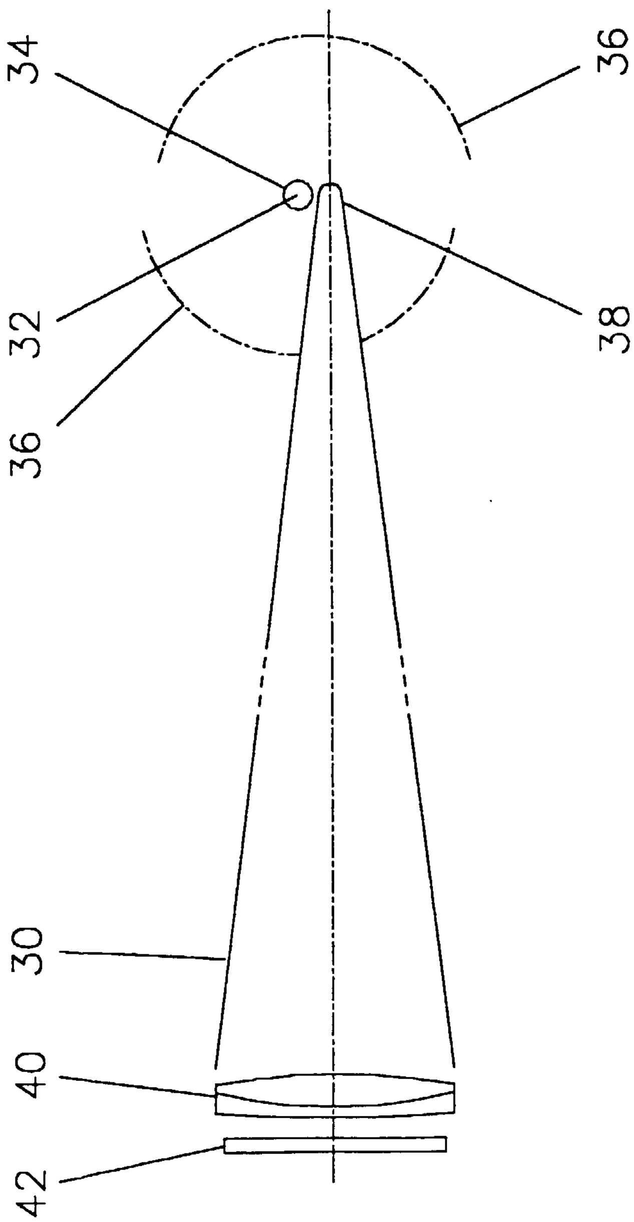

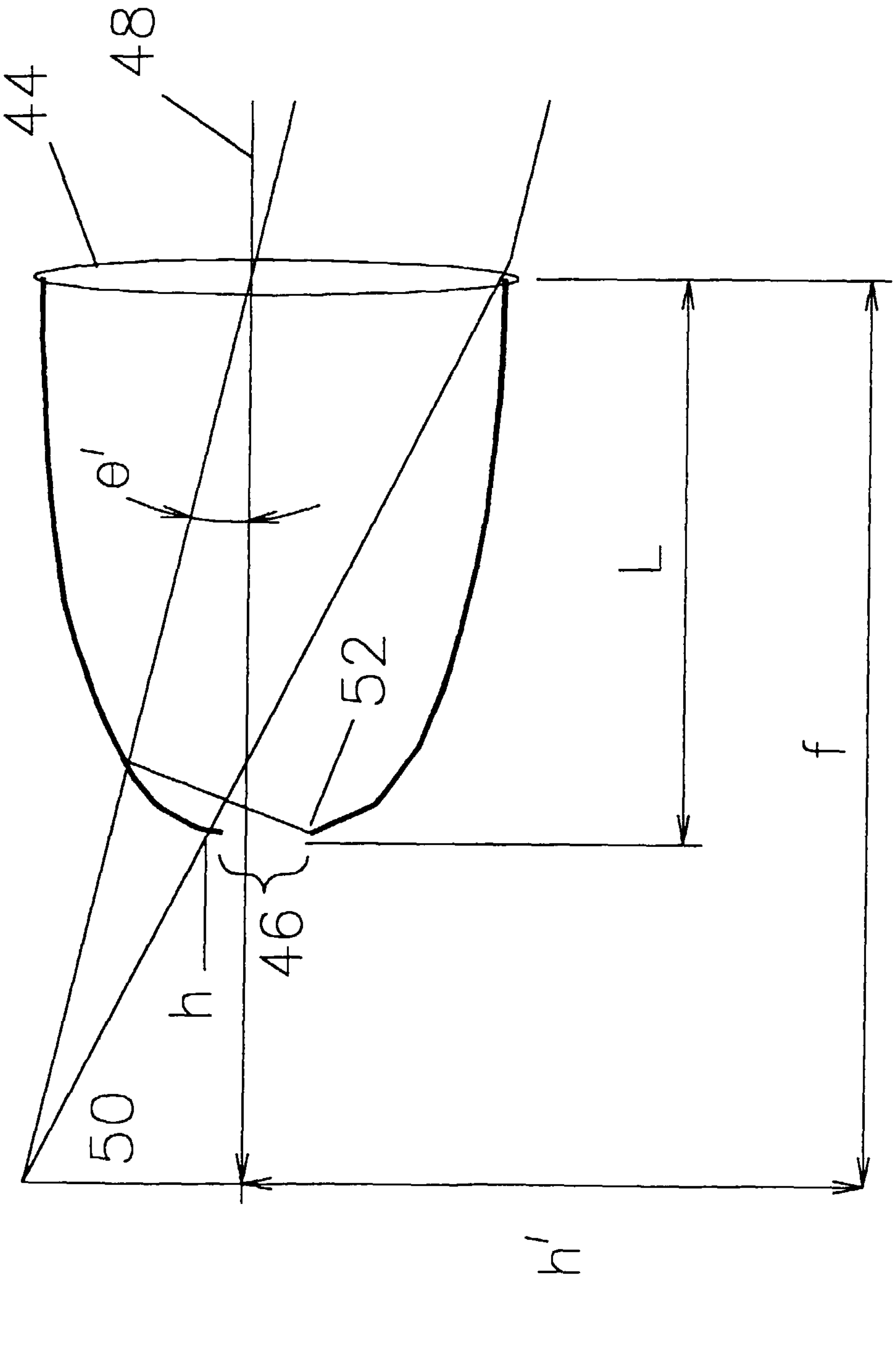


Figure 4

Not to Scale

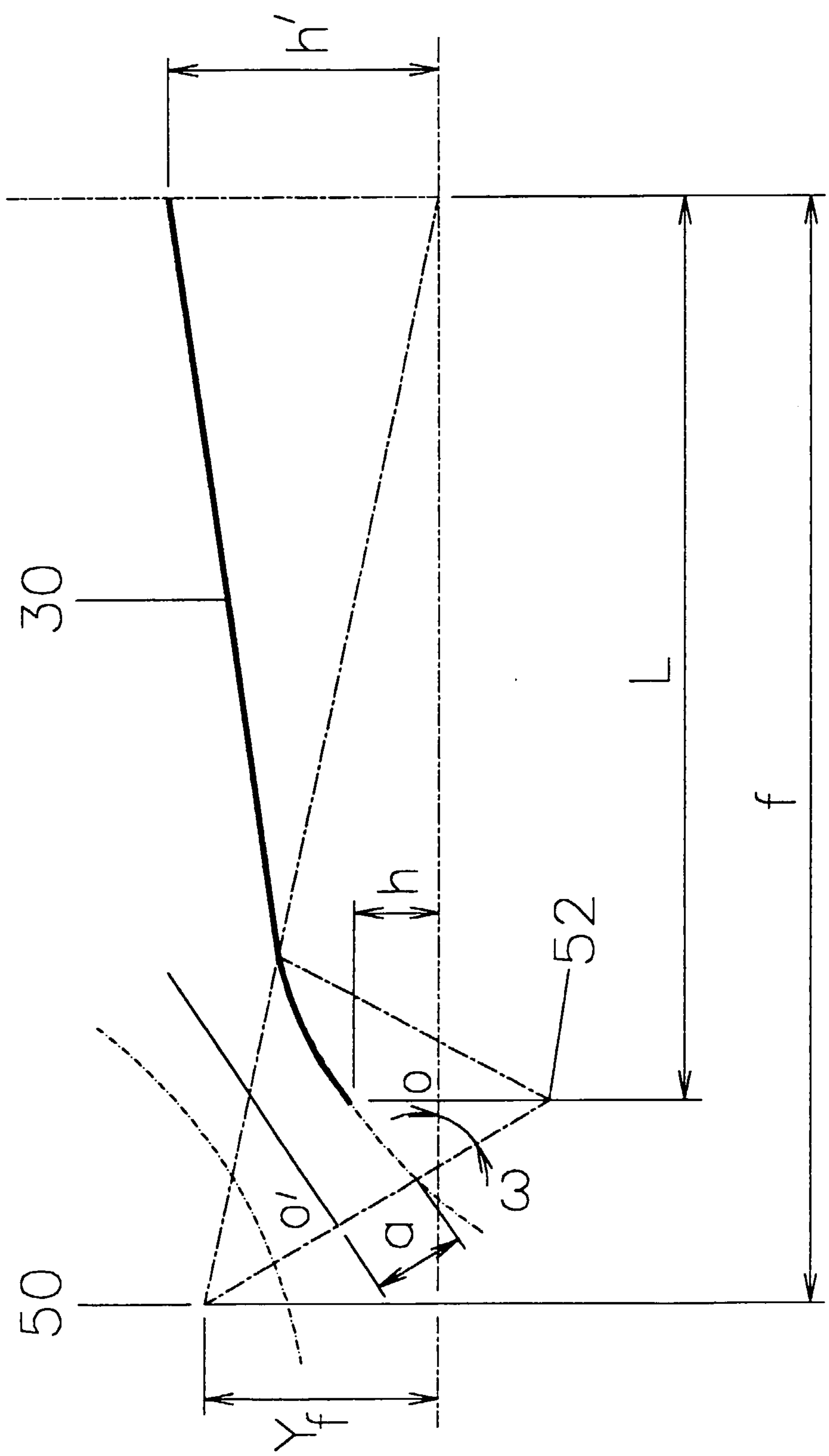


Figure 5

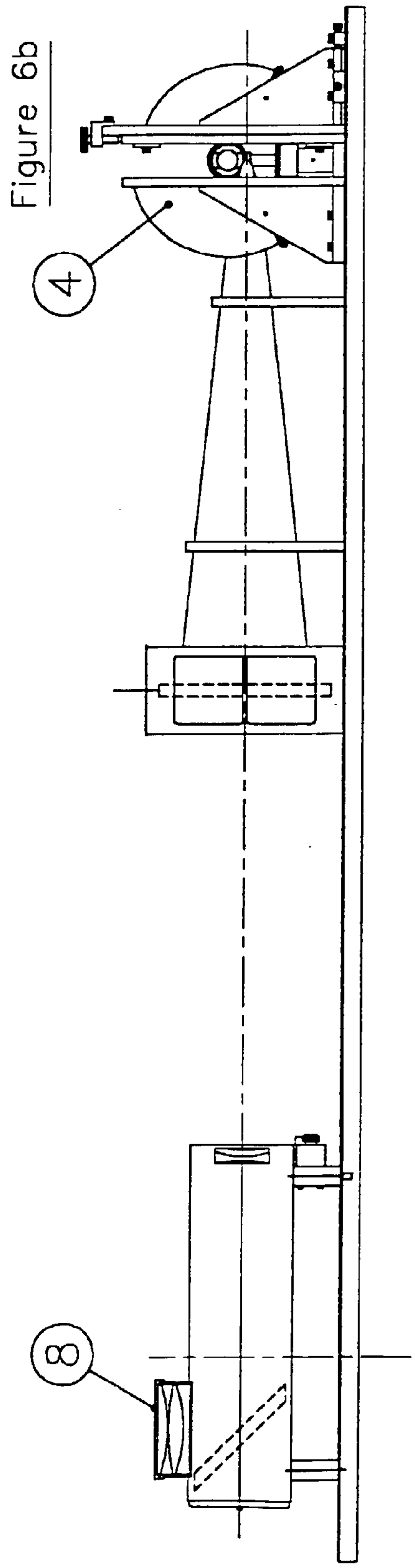
Figure 6b
4
8

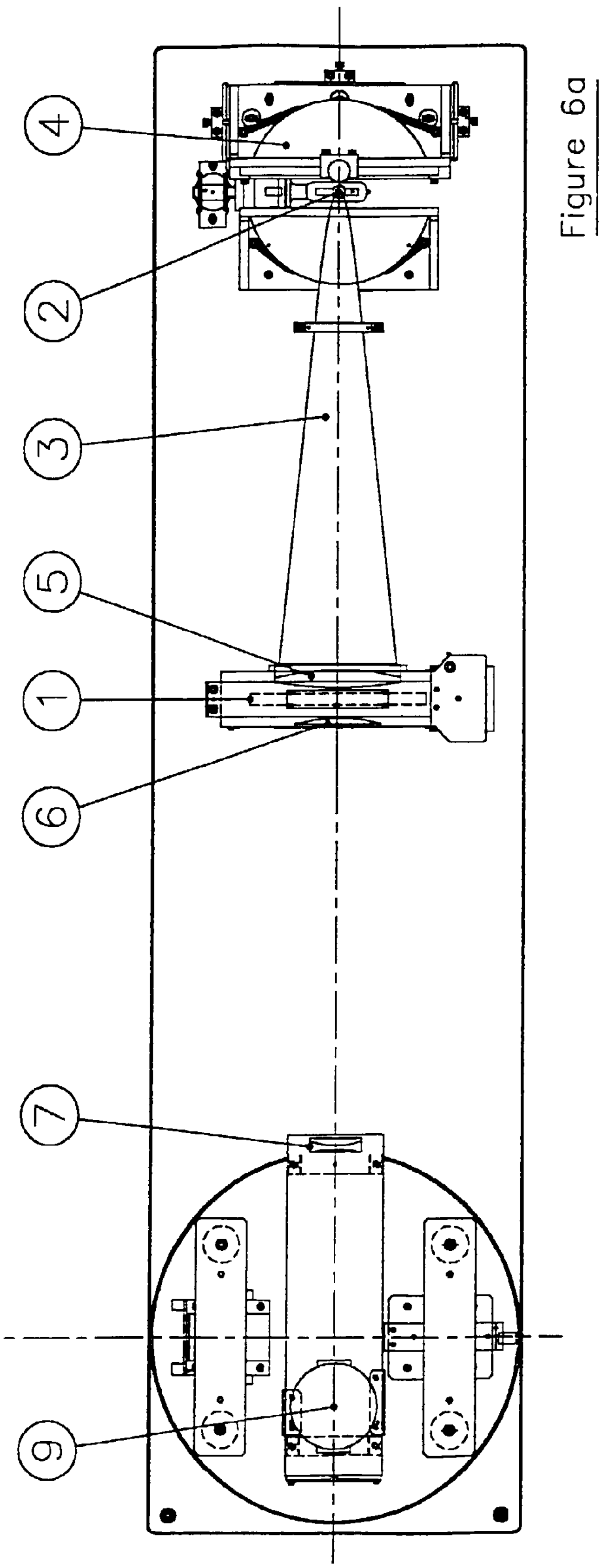
Figure 6a
4
2
3
5
1
6
7
9

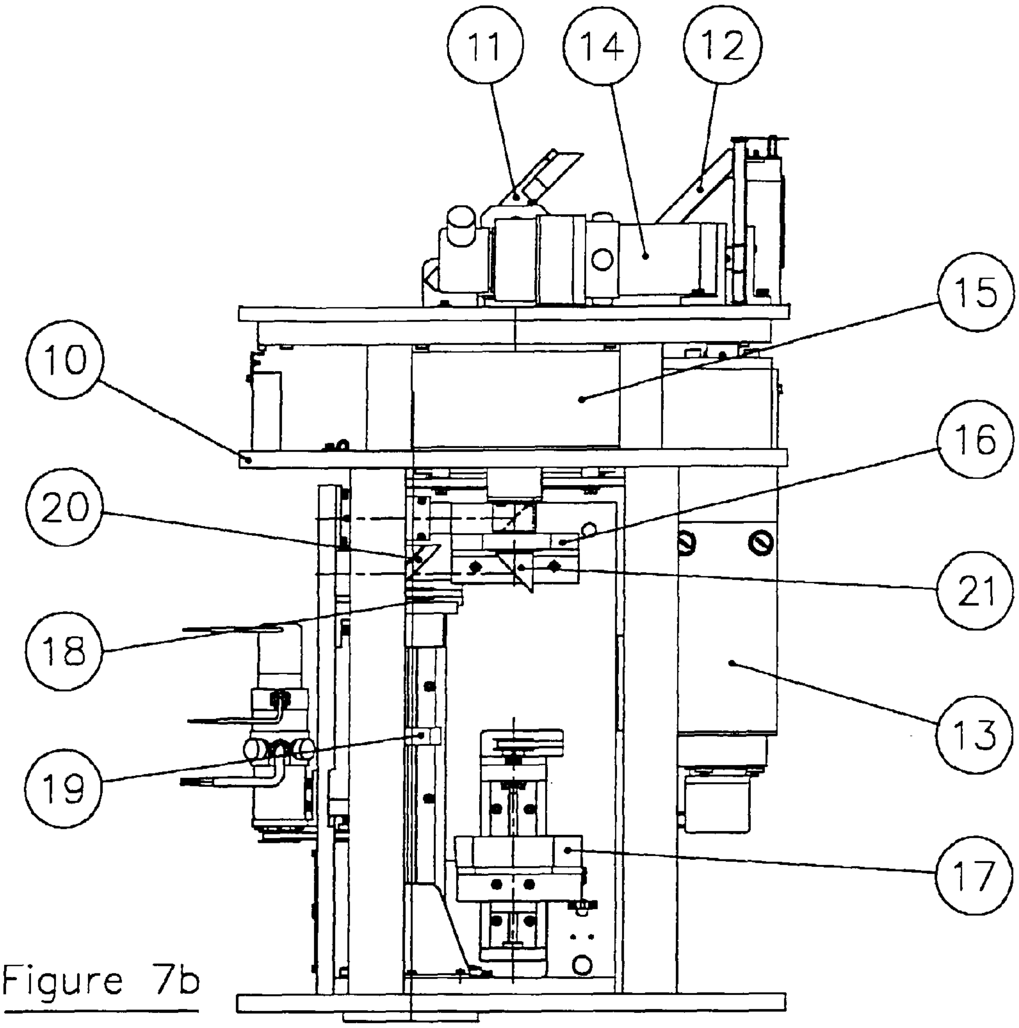


Figure 7b

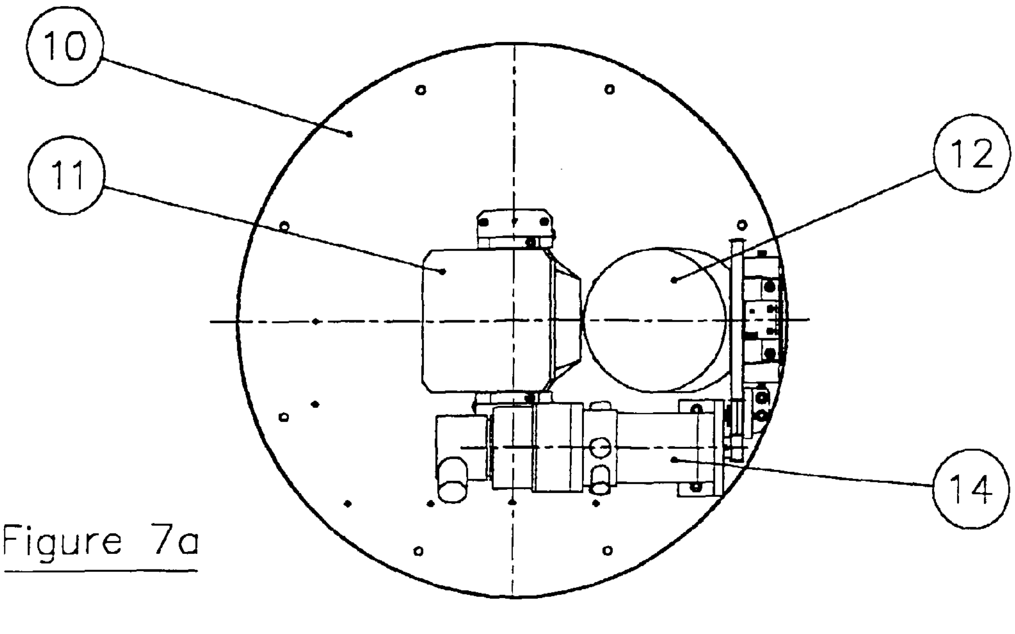


Figure 7a